# EUROPÄISCHE PATENTSCHRIFT

(11) **EP 1 114 267 B1**
(45) Veröffentlichungstag und Bekanntmachung des Hinweises auf die Patenterteilung: **12.03.2003**
(21) Anmeldenummer: 99969480.5
(22) Anmeldetag: 01.04.1999
(51) Int. Cl.: F16K 31/08, F25B 5/00

(54) **KÄLTEERZEUGUNGSKREIS FÜR EINE KÜHLANLAGE**
REFRIGERATING CIRCUIT FOR A REFRIGERATION FACILITY
CIRCUIT DE PRODUCTION DE FROID POUR INSTALLATION REFRIGERANTE

(30) Priorität: 17.09.1998 DE 19842497
(43) Veröffentlichungstag der Anmeldung: 11.07.2001
(73) Patentinhaber: SCHROTT, Harald, 88131 Lindau (DE)
(72) Erfinder: OTT, Hubert, D-88212 Ravensburg (DE)
(74) Vertreter: Patentanwälte Eisele, Otten & Roth
(86) Internationale Anmeldenummer: DE9900998
(87) Internationale Veröffentlichungsnummer: WO00017553

(56) Entgegenhaltungen:
- DE-A- 3 718 490
- DE-A- 4 117 958
- DE-A- 4 224 470
- DE-B- 1 282 402

## Beschreibung

Die Erfindung betrifft ein elektrisches bistabiles Umsteuerventil für einen Kälteerzeugungskreis nach dem Oberbegriff des Anspruchs 1.

Ein derartiges Ventil ist mit der DE 37 18 490 bekannt geworden. Der Kälteerzeugungskreis gemäß dieser Patentschrift umfaßt ein Umschaltventil, bei dem eine Ventilkammer zwischen zwei Polschuhen angeordnet ist, die einen Einlaßkanal sowie zwei Auslaßkanäle aufweisen. Seitlich neben der Ventilkammer sind zwei Permanentmagnete angeordnet. Ein Polschuh erstreckt sich ins Innere einer Steuerspule, die zum Umschalten des mit Hilfe der Permanentmagneten gebildeten bistabilen Ventils dient. Ein Ventilelement ist in der Ventilkammer angeordnet und zwischen den beiden Auslaßkanälen hin und her beweglich.

Ein Jochblech für den Rückschluß sowohl der Permanentmagnete als auch der Spule zu den beiden Polschuhen ist um die gesamte Anordnung herum an den beiden Permanentmagneten vorbei bis zur Rückseite der elektromagnetischen Spule geführt.

Durch die einseitig angeordnete Steuerspule ergeben sich unterschiedliche Antriebskräfte für das Ventilelement bei Beaufschlagung der Spule. Die Steuerspule muß entsprechend groß dimensioniert sein, um auch für die entfernter gelegene Schließposition eine entsprechende Antriebskraft zu erzeugen.

Um dennoch eine definierte, für beide Arbeitsstellungen gleichgroße Schließkraft zu gewährleisten, sind zwei Kugeln in dem Ventilelement gehaltert und über eine Spiralfeder nachgiebig gelagert. Die Federkraft dieser Druckfeder definiert damit die Schließkraft des Ventils.

Durch die hohen Anzugsmomente der Steuerspule kommt es zu einem entsprechend harten Aufprall nicht nur der als Schließkörper dienenden, federnd gelagerten Kugel, sondern des Ventilelementes als Ganzes auf den Polschuhen, wodurch ein entsprechender Verschleiß und insbesondere auch eine unerwünschte Geräuschentwicklung verursacht wird. Die druckfedergelagerte Lagerung im Schließelement ist zudem aufwendig und entsprechend kostenträchtig.

Die Erfindung hat demgegenüber die Aufgabe, ausgehend von dem Stand der Technik, ein Ventil vorzuschlagen, das im Betrieb verschleiß- und geräuschärmer ist.

Diese Aufgabe wird, ausgehend von einem Ventil, nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend wird erfindungsgemäß ein Umschaltventil vorgesehen, bei dem keine mit beiden magnetischen Polen in Verbindung stehenden Rückschlußmittel für den magnetischen Rückschluß eines oder mehrerer Permanentmagnete zu den Polen vorgesehen sind und die Spulenachse zur Ventilkammerachse versetzt angeordnet ist.

Die im Stand der Technik mit beiden Polen in Verbindung stehenden Rückschlußmittel bedingen bisher die koaxiale Spulenanordnung zur Mittelachse der Ventilkammer bzw. der Pole. Durch eine anderweitige Spulenlage unter Beibehaltung dieser Rückschlußmittel zwischen den beiden Polen würde sich ein magnetischer Kurzschluß ergeben, durch den das von der Steuerspule erzeugte Magnetfeld außerhalb der Pole verlaufen würde, die in der Regel durch die Ventilfunktion des Ventilelementes an wenigstens einer Stelle in Längsrichtung einen Luftspalt und somit einen erhöhten magnetischen Widerstand aufweisen.

Durch den Verzicht auf derartige durchgehende Rückschlußmittel ist eine andere Spulenlage ermöglicht, wodurch neue konstruktive Möglichkeiten in der Gestaltung eines erfindungsgemäßen Umschaltventils verwirklicht werden können. Insbesondere können nunmehr Umschaltventile aufgebaut werden, bei denen der Abstand der Steuerspule zwischen den jeweiligen Polen und somit auch die durch die Steuerspule erzeugten Anzugskräfte in beide Steuerrichtungen einander angeglichen werden. Die Steuerspule kann insgesamt hierdurch kleiner ausgelegt werden. Die bislang überhöhte Anzugskraft am spulennahen Pol wird reduziert, so daß der Aufprall an dieser Stelle geschwächt und infolgedessen die Geräuschentwicklung und der Verschleiß vermindert wird.

Durch die ohne Rückschluß vorhandenen großen Luftspalten im Permanentmagnetkreis wirken sich zudem Fertigungstoleranzen bei den Permanentmagneten weniger aus, wodurch der Aufwand stärkerer Magnete zumindest in wirtschaftlicher Hinsicht wenigstens teilweise zu kompensieren ist.

Für eine vorteilhafte Weiterbildung der Erfindung ergibt sich die Möglichkeit, auf einen federgelagerten Schließkörper zu verzichten, so daß die Schließkraft des Ventils allein durch die Dimensionierung und Anordnung eines oder mehrerer Permanentmagnete definiert wird. Der harte Aufprall des Ventilelementes auf dem Pol gemäß dem Stand der Technik kann dabei in Verbindung mit einer entsprechenden Dimensionierung oder Ansteuerung der Steuerspule weitgehend vermieden werden, so daß diese Weiterbildung noch geräusch- und verschleißärmer wird.

In einer vorteilhaften Ausführungsform der Erfindung wird die Steuerspule parallel neben der Ventilkammer angeordnet. Die Anordnung zu den beiden Polen ist hierbei spiegelbildlich genau gleich, so daß die in beiden Richtungen wirkende Triebkraft der Steuerspule auf das Ventilelement ebenfalls nahezu gleich ist. Hierdurch kann die Größe der Spule bzw. deren Steuerstrom, die Impulsdauer des Steuerstroms, usw. soweit reduziert werden, daß durch die Anzugskraft der Spule lediglich das Umkippen von einer stabilen Arbeitsstellung in die andere bewirkt wird. Der Aufschlag auf dem Ventilsitz wird minimal und im Wesentlichen durch die mit Hilfe der Permanentmagneten vorgegebenen notwendigen Schließkraft bestimmt.

In einer Weiterführung dieser Ausführungsform wird der Gesamtaufbau des Ventils spiegelsymmetrisch zu einer Mittelebene der Ventilkammer quer zur Bewegungsrichtung des das Ventilelement bildenden Ankers ausgebildet. Ein derartiger spiegelsymmetrischer Aufbau, bei der dementsprechend beide Auslaßkanäle in Längsrichtung und der Einlaßkanal in Querrichtung auf Höhe der Mittelebene angeordnet ist, stellt sicher, daß für beide Arbeitsstellungen des Ankers die gleichen Kräfteverhältnisse herrschen, so daß die maximal während des Betriebs vorherrschende Anzugskraft und somit auch der Aufprall des Ankers bzw. Schließkörpers auf dem Ventilsitz weiter reduziert werden können.

Um eine hohe Lebensdauer des Ventils zu erzielen, empfiehlt es sich, abriebfestes Material, insbesondere an den Dichtflächen zu verwenden. Da die üblicherweise verwendeten Kühlmittel zum Teil chemisch sehr aggressiv sind, ist auch in dieser Hinsicht auf eine geeignete Materialauswahl zu achten. Beide Voraussetzungen werden beispielsweise durch ein entsprechendes Metall wie Stahl oder dergleichen oder aber auch durch eine Keramik erfüllt. Diese Materialien sind hart und abriebfest und sowie chemisch sehr resistent.

In einer vorteilhaften Ausführungsform der Erfindung umfaßt der Anker bzw. das Ventilelement einen gehärtete Oberfläche, beispielsweise durch das Anbringen eine gehärteten Schließkörpers zur Abdichtung einer Auslaßöffnung.

An die Dichtigkeit eines erfindungsgemäßen Ventils werden, ebenso wie an die Lebensdauer, sehr hohe Anforderungen gestellt. Auch nach mehrjährigem Betrieb in einem Kühlmittelkreislauf sollte die Betriebssicherheit des Ventils nicht beeinträchtigt sein. Durch eine gehärtete Oberfläche bzw. einen gehärteten Schließkörper, wie oben angeführt, läßt sich die Verschleißfestigkeit des Ventils erhöhen.

Zum gleichen Zweck empfiehlt es sich, gehärtete Ventilsitze vorzusehen, die im Falle des obenerwähnten symmetrischen Gesamtaufbaus an der Innenseite der Pole vorzusehen sind.

Die Härtung von weichmagnetischem Material ist problematisch, da die Temperaturbehandlung zu einer Magnetisierung führen kann, so daß letztendlich ein hartmagnetisches Material vorliegt. Diesem Problem kann durch eine partielle Härtung, insbesondere durch eine Laserhärtung oder eine Randschichthärtung, entgegengewirkt werden. Gehärtete Dichtflächen ermöglichen eine größere Schließkraft bei geringerem Verschleiß.

Vorzugsweise wird in einer besonderen Ausführungsform der Erfindung ein solcher Ventilsitz durch eine Randschichthärtung eines in das Material des Pols eingearbeiteten Ventilsitzes hergestellt.

In einer besonderen Ausführungsform der Erfindung wird als Schließkörper eine Kugel verwendet. Diese Kugel kann bei einem erfindungsgemäßen Ventil, wie bereits oben angeführt, fest mit dem Anker verbunden sein, da die Schließkraft des Ventils durch die Dimensionierung und Anordnung der Permanentmagneten und nicht durch mechanische Hilfsmittel, wie im Stand der Technik, zu begrenzen ist.

Aufgrund der günstigeren Spulenanordnung sowie dem Verzicht auf die bewegliche Lagerung eines Schließkörpers kann das Ventilelement bzw. der Anker mit Schließkörper insgesamt kleiner ausgeführt werden. Hierdurch wird bei der Verstellung des Ventils von einer Arbeitsstellung in die andere weniger kinetische Energie auf das Ventilelement aufgebracht, was wiederum den Aufprall auf dem jeweiligen Ventilsitz schwächt und einer weiteren Reduzierung des Verschleißes bzw. der Geräuschentwicklung dient.

Ein kleiner Magnetanker bewirkt außerdem eine kurze umspülte Strecke innerhalb des Ventils, so daß die Verschmutzungs- bzw. Verstopfungsgefahr durch mitgespülte Partikel zwischen dem Anker und der Wandung des Ventilkörpers verringert wird.

Vorteilhafterweise wird ein Verhältnis von Durchmesser zu Länge des Ventilelementes bzw. des Ankers von größer als 1:4, z. B. 1:1,5 gewählt. Die Reduzierung des magnetisierbaren Materials im Anker ist gegebenenfalls durch einen Permanentmagneten mit höherer Energiedichte zu kompensieren, sofern dies für eine ausreichende Schließkraft des Ventils erforderlich ist.

In einer Weiterbildung der Erfindung werden die konstruktiven Möglichkeiten in der Gestaltung des Ventilelementes, z. B. durch entsprechende Ausgestaltung der Halterung eines Schließkörpers dahingehend genutzt, daß auch in geschlossenem Zustand des Ventils ein Restluftspalt zwischen dem Anker und dem jeweiligen Pol verbleibt. Hierdurch wird der Einfluß der Remanenz gemindert.

Weiterhin wird hierdurch vermieden, daß der Magnetanker an einem der Pole anschlägt. Hierdurch erfolgt kein stirnseitiger Verschleiß des Magnetankers, so daß ein konstanter Hub über eine lange Lebensdauer des Ventils gewährleistet ist.

Durch den Wegfall des Federweges des Schließkörpers gegenüber dem Stand der Technik ist der Hub des Magnetankers insgesamt kleiner auszubilden.

In einer Weiterbildung der Erfindung wird das Ventilgehäuse als Rohr mit endseitiger Verjüngung vorgesehen. Diese Ausbildungsform gewährleistet eine sehr hohe Dichtigkeit gegenüber dem Kühlmittel, insbesondere wird die aus Sicherheitsgründen für derartige Ventile geforderte Dichtigkeit gegenüber Helium hierdurch leichter erzielbar.

In einer Weiterbildung der Erfindung wird die Spule demontierbar vorgesehen. Dies wird dadurch erleichtert, daß die Spule nunmehr durch den Verzicht auf die magnetischen Rückschlußmittel auch neben der Ventilkammer angeordnet werden kann.

Eine besondere Ausführungsform der Erfindung wird mit einer Vergußmasse versehen, die wenigstens teilweise um das Ventilgehäuse herum angeordnet ist. Eine derartige Vergußmasse kann als Geräuschdämpfung wirken und somit die erfindungsgemäß erzielbaren Vorteile weiter erhöhen.

Vorzugsweise wird die Vergußmasse zur Befestigung eines oder mehrerer Permanentmagnete verwendet, indem diese wenigstens teilweise ebenfalls von der Vergußmasse umschlossen werden.

Auch etwaige Jochbleche können durch eine derartige Vergußmasse befestigt werden.

Eine solche Vergußmasse kann auch die Leitungsanschlüsse für das Kühlmittel oder sonstige Befestigungselemente umschließen und somit einen Schutz gegen mechanische Belastung bieten. Insbesondere bei den Leitungsanschlüssen wird hierdurch die Leckgefahr aufgrund mechanischer Verformung vermieden.

Ein Ausführungsbeispiel der Erfindung ist in der Zeichnung dargestellt und wird anhand der Figuren nachfolgend näher erläutert.

Im Einzelnen zeigen
- Fig. 1: einen Längsschnitt durch ein Ventil für einen erfindungsgemäßen Kühlmittelkreislauf,
- Fig. 2: einen Querschnitt durch ein Ventil gemäß Fig. 1,
- Fig. 3: einen Längsschnitt durch ein Ventil gemäß Fig. 1 durch eine senkrecht dazu angeordnete Schnittebene,
- Fig. 4: eine Darstellung eines weiteren Ausführungsbeispiels in einer Schnittebene gemäß Fig. 3.

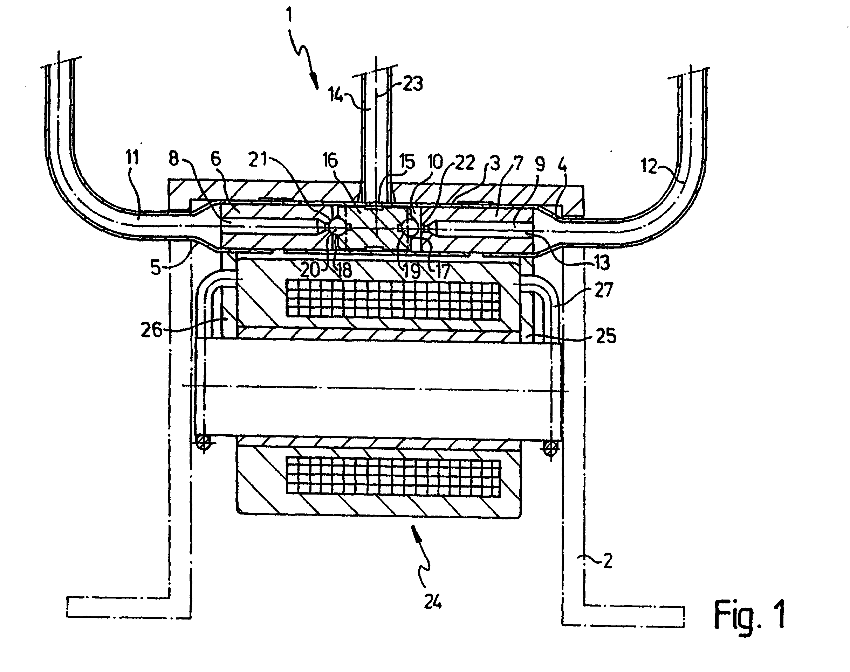

Das Ventil 1 gemäß Fig. 1 umfaßt ein Gehäuse 2, in dem ein Rohr 3 mit endseitigen Verjüngungen 4, 5 angeordnet ist. Im Innern des Rohrs 3 sind zwei magnetische Pole 6, 7 aus magnetisierbarem Material angeordnet. Jeder Pol 6, 7 weist eine axiale Durchgangsbohrung 8, 9 auf, die eine mittig angeordnete Ventilkammer 10 mit zwei Auslaßleitungen 11, 12 verbinden. Die Auslaßleitungen 11, 12 bestehen aus endseitigen Verlängerungen des Rohres 3.

Mittig ist an der Ventilkammer 10 quer zur Ventilachse 13 eine Einlaßleitung 14 mit dem Rohr 3 verbunden, beispielsweise verschweißt oder verlötet. Die Einlaßleitung 14 steht über eine Durchgangsbohrung 15 mit der Ventilkammer 10 in Verbindung.

Im Innern der Ventilkammer 10 befindet sich ein Anker 16 aus magnetisierbarem Material, an dem in endseitig vorstehenden Fassungen 17, 18 jeweils eine Kugel 19, 20 als Schließkörper befestigt ist.

In den Polen 6, 7 ist innenseitig, d. h. der Ventilkammer 10 zugewandt, jeweils ein konusförmiger Ventilsitz 21, 22, beispielsweise durch Randschichthärtung des Materials der Pole 6, 7 vorgesehen.

Symmetrisch zur Mittelachse 23, die quer zur Ventilachse 13 verläuft, ist parallel zu dem den Ventilkörper bildenden Rohr 3 eine Steuerspule 24 angeordnet. In zwei mit dem Gehäuse 2 in Verbindung stehenden Laschen 25, 26, die zugleich als Jochblech für den magnetischen Rückschluß der Spule 24 zu den Polen 6, 7 dienen, ist ein Befestigungsbügel 27 drehbar gelagert, der in seiner geschlossenen Stellung den Kern der Spule so weit umgreift, daß die Spule 24 an dem Ventilkörper 3 lösbar fixiert ist.

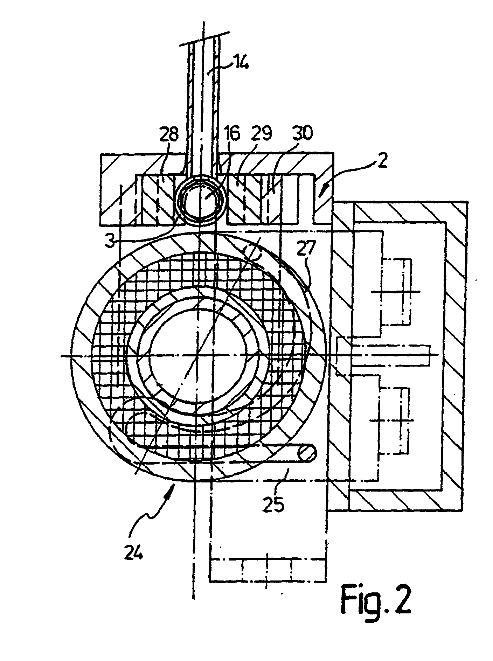

In Fig. 2 ist diese Art der Spulenbefestigung mit Hilfe des gestrichelt dargestellten Befestigungsbügels 27 ebenfalls ersichtlich.

Weiterhin ist dieser Darstellung die Anordnung zweier Permanentmagnete 28, 29 beidseits des Ventilkörpers 3 mit dem darin befindlichen Anker 16 zu entnehmen. Außerhalb der Permanentmagnete 28, 29 ist eine Vergußmasse 30 aufgebracht, die die Magnete 28, 29 sowie die als Jochbleche dienenden Laschen 25, 26 hält.

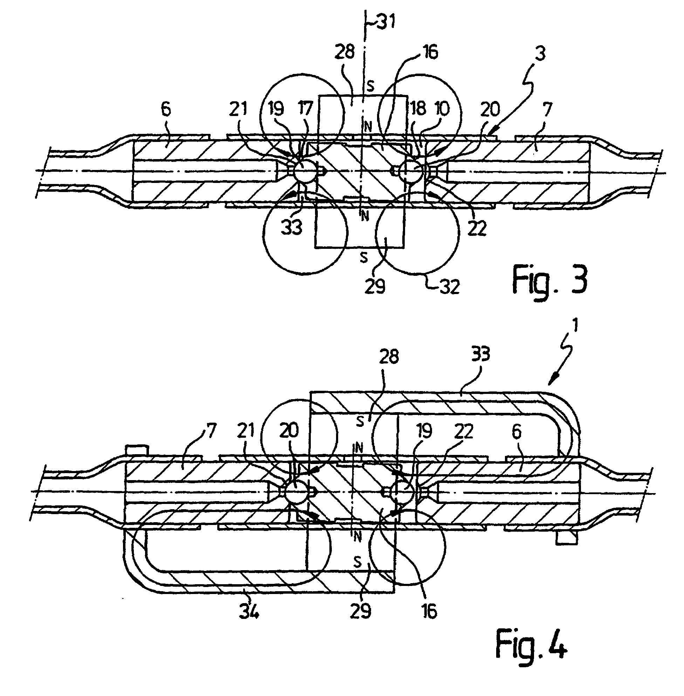

In der Darstellung gemäß Fig. 3 ist erkennbar, daß der gesamte Ventilaufbau symmetrisch zu einer durch die Mittelachse 31 und die Mittelachse 23 (s. Fig. 1) aufgespannten Mittelebene aufgebaut ist. Die vollständige Symmetrie liegt natürlich nur dann vor, wenn der Anker 16 in einer Mittelposition zwischen seinen Arbeitsstellungen liegt, die jedoch aufgrund der bistabilen Funktion des Ventils äußerst labil und im Betrieb nicht erwünscht ist.

Die beiden Magnete 28, 29 sind beidseits des Ventilkörpers 3 auf Höhe der Mittelachse 31 angebracht und zeigen mit ihrem jeweils gleichnamigen Pol zur Ventilkammer 10 hin. Hierdurch ergibt sich der mit vier Kreislinien 32 angedeutete Feldverlauf des resultierenden Magnetfeldes. Durch diese Anordnung wird der Anker 16 in seinen beiden Arbeitsstellungen fixiert, bei denen die Kugeln 19, 20 auf ihren jeweiligen Ventilsitz 21, 22 aufliegen.

Wie anhand von Fig .3 erkennbar, sind keinerlei Rückschlußmittel für die Permanentmagnete vorhanden, so daß der Feldverlauf einer vor oder hinter der Darstellungsebene angeordneten Steuerspule 24 im Wesentlichen durch deren Jochbleche und die Pole 6, 7 verläuft und somit seine volle Wirkung auf den Anker 16 entfalten kann.

In der Darstellung gemäß Fig. 3 ist ebenfalls erkennbar, daß auch bei geschlossenem Ventil durch die vorstehende Fassung 17, 18 ein Restluftspalt 33 zwischen dem Anker 16 und dem Pol 6 bzw. Pol 7 verbleibt, wodurch der Einfluß der magnetischen Remanenz verringert wird.

Fig. 4 zeigt eine alternative Ausführungsform, bei der jeweils ein Permanentmagnet 28, 29 über ein Rückschlußblech 33, 34 mit jeweils einem Pol 6, 7 gekoppelt ist. Hierdurch ergibt sich jeweils auf einer Seite des Ventilkörpers 3 ein gebündelter Feldverlauf des Magnetfeldes in achsenparalleler Richtung durch den jeweiligen Pol 6, 7, wodurch das Anzugsmoment auf den Anker 16 erhöht wird. Das durch diese nicht achsensymmetrische Anordnung ebenfalls nicht spiegelbildliche Magnetfeld verursacht ein Drehmoment auf den Anker 16, was jedoch bei guter Führung des Ankers in axialer Richtung nicht zuletzt aufgrund der als Schließkörper dienenden, sich im jeweiligen Ventilsitz 21, 22 selbst zentrierenden Kugeln 19, 20, in bestimmten Anwendungsfällen nicht störend sein muß.

Wesentlich ist, daß die Rückschlußbleche 33, 34 die beiden Pole nicht miteinander verbinden, d. h. nicht durchgehend über die gesamte Länge des Ventils 1 ausgebildet sind, so daß das Magnetfeld der parallel seitlich neben dem Ventilkörper 3 angeordneten Steuerspule durch die Pole 6, 7 geführt wird und nicht über Rückschlußbleche kurzgeschlossen wird.

### Bezugszeichenliste:

- 1: Ventil
- 2: Gehäuse
- 3: Rohr bzw. Ventilkörper
- 4: Verjüngung
- 5: Verjüngung
- 6: Pol
- 7: Pol
- 8: Durchgangsbohrung
- 9: Durchgangsbohrung
- 10: Ventilkammer
- 11: Auslaßleitung
- 12: Auslaßleitung
- 13: Ventilachse
- 14: Einlaßleitung
- 15: Durchgangsbohrung
- 16: Anker
- 17: Fassung
- 18: Fassung
- 19: Kugel
- 20: Kugel
- 21: Ventilsitz
- 22: Ventilsitz
- 23: Mittelachse
- 24: Steuerspule
- 25: Lasche bzw. Jochblech
- 26: Lasche bzw. Jochblech
- 27: Befestigungsbügel
- 28: Permanentmagnet
- 29: Permanentmagnet
- 30: Vergußmasse
- 31: Mittelachse
- 32: Feldverlauf
- 33: Restluftspalt
- 34: Rückschlußblech
- 35: Rückschlußblech

## Patentansprüche

1. Elektrisches bistabiles Umsteuerventil für einen Kälteerzeugungskreis zur Verbindung des Kondensators mit einem oder mehreren Verdampfern, das folgende Merkmale aufweist:
- eine Ventilkammer mit wenigstens einer Einlaßöffnung und wenigstens zwei Auslaßöffnungen,
- ein Ventilelement wenigstens teilweise aus magnetischem Material, das zwischen wenigstens zwei Arbeitsstellungen in der Ventilkammer axial bewegbar ist und dabei jeweils eine der beiden Auslaßöffnungen verschließt, während die andere geöffnet wird,
- Mittel zum Erzeugen eines Permanentmagnetfelds zum Halten des Ventilelementes in jeweils einer Arbeitsstellung, die zwei Polschuhe und wenigstens einen Permanentmagneten aufweisen,
- eine Steuerspule zur Erzeugung eines Steuermagnetfeldes zum wahlweisen Bewegen des Ventilelementes zwischen den Arbeitsstellungen,
**dadurch gekennzeichnet, daß**
keine mit beiden Polen (6, 7) in Verbindung stehenden Rückschlußmittel für den magnetischen Rückschluß von dem wenigstens einen Permanentmagneten zu den Polen (6, 7) vorgesehen sind und die Spulenachse zur Ventilkammerachse versetzt angeordnet ist.

2. Ventil nach Anspruch 1 **dadurch gekennzeichnet, daß** die Schließkraft des Umschaltventils durch einen oder mehrere Permanentmagneten (28, 29) bestimmt ist.

3. Ventil nach einem der vorgenannten Ansprüche **dadurch gekennzeichnet, daß** ein Schließkörper (19, 20) fest mit dem Anker (16) verbunden ist.

4. Ventil nach einem der vorgenannten Ansprüche **dadurch gekennzeichnet, daß** die Steuerspule (24) parallel neben der Ventilkammer (10) angeordnet ist.

5. Ventil nach einem der vorgenannten Ansprüche **dadurch gekennzeichnet, daß** das Umschaltventil einen spiegelsymmetrischen Gesamtaufbau bezüglich einer Mittelebene der Ventilkammer quer zur Bewegungsrichtung des Ankers (16) aufweist.

6. Ventil nach einem der vorgenannten Ansprüche **dadurch gekennzeichnet, daß** der Anker (16) des Umschaltventils (1) eine gehärtete Dichtfläche umfaßt.

7. Ventil nach einem der vorgenannten Ansprüche **dadurch gekennzeichnet, daß** der Anker (16) des Umschaltventils (1) einen wenigstens teilweise gehärteten Schließkörper (19, 20) umfaßt.

8. Ventil nach einem der vorgenannten Ansprüche **dadurch gekennzeichnet, daß** das Umschaltventil (1 einen gehärteten Ventilsitz (21, 22) umfaßt.

9. Ventil nach einem der vorgenannten Ansprüche **dadurch gekennzeichnet, daß** im Umschaltventil (1) eine Kugel (19, 20) als Schließkörper im Anker (16) gelagert ist.

10. Ventil nach einem der vorgenannten Ansprüche **dadurch gekennzeichnet, daß** das Verhältnis des Durchmessers zur Länge des Ankers (16) größer als 1:4 ist.

11. Ventil nach einem der vorgenannten Ansprüche **dadurch gekennzeichnet, daß** ein Restluftspalt (33) zwischen dem Anker (16) und einem Pol (6, 7) vorgesehen ist.

12. Ventil nach einem der vorgenannten Ansprüche **dadurch gekennzeichnet, daß** die Steuerspule (24) des Umschaltventils (1) demontierbar ist.

13. Ventil nach einem der vorgenannten Ansprüche **dadurch gekennzeichnet, daß** eine Vergußmasse im Umschaltventil (1) vorgesehen ist, die den Ventilkörper (3) wenigstens teilweise umgibt.

14. Ventil nach einem der vorgenannten Ansprüche **dadurch gekennzeichnet, daß** das Umschaltventil eine Vergußmasse zur Befestigung wenigstens eines Permanentmagneten (28, 29) aufweist.

15. Ventil nach einem der vorgenannten Ansprüche **dadurch gekennzeichnet, daß** das Umschaltventil (1) eine Vergußmasse (30) zur Befestigung wenigstens eines Jochblechs (25, 26) für die Steuerspule (24) umfaßt.

16. Kälteerzeugungskreislauf für eine Kühlanlage mit mehreren Kühlräumen, einem Kompressor, einem Kondensator und mit mehreren jeweils einem der Kühlräume zugeordneten Verdampfern, **dadurch gekennzeichnet, daß** ein Ventil nach einem der vorgenannten Ansprüche vorgesehen ist.

17. Kühl- oder Gefriergerät, **dadurch gekennzeichnet, daß** es einen Kälteerzeugungskreislauf nach einem der vorgenannten Ansprüche aufweist.

## Claims

1. Electrical bistable reverse valve for a cold production circuit to connect the condenser to one or more evaporators, comprising the following features:
- a valve housing with at least one inlet aperture and at least two outlet apertures,
- a valve element at least partially consisting of magnetic material, axially movable in the valve housing between at least two operating positions and in the process closing one of the two outlet apertures respectively while the other is opened,
- means for generating a permanent magnetic field for holding the valve element in a respective operating position, comprising two pole shoes and at least one permanent magnet,
- a control coil for generating a control magnetic field for selectively moving the valve element between the operating positions, **characterised in that** no return means connected to the two poles (6, 7) for the magnetic return from the at least one permanent magnet to the poles (6, 7) are provided and the coil axis is arranged offset to the valve housing axis.

2. Valve according to claim 1, **characterised in that** the closing force of the reversing valve is determined by one or more permanent magnets (28, 29).

3. Valve according to either of the preceding claims, **characterised in that** a closing member (19, 20) is rigidly connected to the armature (16).

4. Valve according to any of the preceding claims, **characterised in that** the control coil (24) is arranged parallel and adjacent to the valve housing (10).

5. Valve according to any of the preceding claims, **characterised in that** the reversing valve has a mirror symmetrical overall construction with respect to a centre plane of the valve housing transversely to the direction of motion of the armature (16).

6. Valve according to any of the preceding claims, **characterised in that** the armature (16) of the reversing valve (1) comprises a hardened sealing face.

7. Valve according to any of the preceding claims, **characterised in that** the armature (16) of the reversing valve (1) comprises an at least partially hardened closing member (19, 20).

8. Valve according to any of the preceding claims, **characterised in that** the reversing valve (1) comprises a hardened valve seat (21, 22).

9. Valve according to any of the preceding claims, **characterised in that** in the reversing valve (1) a ball (19, 20) is mounted as a closing member in the armature (16).

10. Valve according to any of the preceding claims, **characterised in that** the ratio of the diameter to the length of the armature (16) is greater than 1:4.

11. Valve according to any of the preceding claims, **characterised in that** a residual air gap (33) is provided between the armature (16) and a pole (6, 7).

12. Valve according to any of the preceding claims, **characterised in that** the control coil (24) of the reversing valve (1) can be disassembled.

13. Valve according to any of the preceding claims, **characterised in that** a casting compound is provided in the reversing valve (1) and at least partially surrounds the valve body (3).

14. Valve according to any of the preceding claims, **characterised in that** the reversing valve comprises a casting compound for fastening at least one permanent magnet (28, 29).

15. Valve according to any of the preceding claims, **characterised in that** the reversing valve (1) comprises a casting compound (30) for fastening at least one yoke lamination (25, 26) for the control coil (24).

16. Cold production circuit for a cooling system with a plurality of cooling chambers, a compressor, a condenser and with a plurality of evaporators associated with one of the cooling chambers respectively, **characterised in that** a valve according to any of the preceding claims is provided.

17. Cooling or freezing apparatus, **characterised in that** it comprises a cold production circuit according to any of the preceding claims.

## Revendications

1. Valve d'inversion bistable électrique pour un circuit réfrigérant pour relier le condenseur à un ou plusieurs évaporateurs, qui présente les caractéristiques suivantes :
- une chambre de valve ayant au moins une ouverture d'entrée et au moins deux ouvertures de sortie,
- un élément de valve au moins partiellement en matière magnétique, qui est axialement déplaçable entre au moins deux positions de travail dans la chambre de valve et, de plus, ferme, à chaque fois, une des deux ouvertures de sortie, tandis que l'autre est ouverte,
- des moyens pour engendrer un champ magnétique permanent pour maintenir l'élément de valve dans, à chaque fois, une position de travail, qui présentent deux pièces polaires et au moins un aimant permanent,
- une bobine de commande pour engendrer un champ magnétique de commande pour déplacer au choix l'élément de valve entre les positions de travail,
**caractérisée en ce qu'**aucun moyen de fermeture relié aux deux pôles (6, 7) pour la fermeture magnétique de l'aimant permanent par rapport aux pôles (6, 7) n'est prévu, et l'axe de bobine est agencé de façon décalée par rapport à la chambre de valve.

2. Valve selon la revendication 1,
**caractérisée en ce que** la force de fermeture de la valve d'inversion est déterminée par un ou plusieurs aimants permanents (28, 29).

3. Valve selon une des revendications précitées,
**caractérisée en ce qu'**un corps de fermeture (19, 20) est solidaire de l'induit (16).

4. Valve selon une des revendications précitées,
**caractérisée en ce que** la bobine de commande (24) est agencée en parallèle à côté de la chambre de valve (10).

5. Valve selon une des revendications précitées,
**caractérisée en ce que** la valve d'inversion présente une construction globale symétrique relativement à un plan médian de la chambre de valve transversalement à la direction de déplacement de l'induit (16).

6. Valve selon une des revendications précitées,
**caractérisée en ce que** l'induit (16) de la valve d'inversion (1) présente une surface d'étanchéité durcie.

7. Valve selon une des revendications précitées,
**caractérisée en ce que** l'induit (16) de la valve d'inversion (1) comporte un corps de fermeture (19, 20) au moins partiellement durci.

8. Valve selon une des revendications précitées,
**caractérisée en ce que** la valve d'inversion (1) comporte un siège de valve durci (21, 22).

9. Valve selon une des revendications précitées,
**caractérisée en ce que**, dans la valve d'inversion (1), une bille (19, 20) est montée dans l'induit (16) comme corps de fermeture.

10. Valve selon une des revendications précitées,
**caractérisée en ce que** le rapport du diamètre à la longueur de l'induit (16) est supérieur à 1:4.

11. Valve selon une des revendications précitées,
**caractérisée en ce qu'**un entrefer résiduel (33) est prévu entre l'induit (16) et un pôle (6, 7).

12. Valve selon une des revendications précitées,
**caractérisée en ce que** la bobine de commande (24) de la valve d'inversion (1) est démontable.

13. Valve selon une des revendications précitées,
**caractérisée en ce qu'**une masse de remplissage est prévue dans la valve d'inversion (1), qui entoure au moins partiellement le corps de valve (3).

14. Valve selon une des revendications précitées,
**caractérisée en ce que** la valve d'inversion présente une masse de remplissage pour fixer au moins un aimant permanent (28, 29).

15. Valve selon une des revendications précitées,
**caractérisée en ce que** la valve d'inversion (1) comporte une masse de remplissage (30) pour fixer au moins une tôle de culasse (25, 26) pour la bobine de commande (24).

16. Circuit réfrigérant pour une installation de réfrigération comportant plusieurs espaces de réfrigération, un compresseur, un condenseur, et plusieurs évaporateurs associés à chaque fois à un des espaces de réfrigération,
**caractérisé en ce qu'**une valve selon une des revendications précitées est prévue.

17. Appareil de réfrigération ou de congélation,
**caractérisé en ce qu'**il présente un circuit réfrigérant selon une des revendications précitées.
